(19) Europäisches Patentamt

European Patent Office

Office européen des brevets

(11) **EP 4 776 227 A1**

(12) **EUROPEAN PATENT APPLICATION**

(43) Date of publication:
**15.07.2026 Bulletin 2026/29**

(21) Application number: **25206864.8**

(22) Date of filing: **06.10.2025**

(51) International Patent Classification (IPC):
***G06T 11/00*** *(2026.01)*

(52) Cooperative Patent Classification (CPC):
**G06T 11/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **10.01.2025 KR 20250003800**
　　　　　　**19.03.2025 KR 20250035427**

(71) Applicant: **Samsung Electronics Co., Ltd.**
**Suwon-si, Gyeonggi-do 16677 (KR)**

(72) Inventors:
- **CHOI, Hee Min**
  **Suwon-si 16678 (KR)**

- **KANG, Hyoa**
  **Suwon-si 16678 (KR)**
- **KIM, Suji**
  **Suwon-si 16678 (KR)**
- **PARK, Junheum**
  **Suwon-si 16678 (KR)**
- **OH, Dokwan**
  **Suwon-si 16678 (KR)**
- **CHO, Sung Kwang**
  **Suwon-si 16678 (KR)**

(74) Representative: **Marks & Clerk LLP**
**15 Fetter Lane**
**London EC4A 1BW (GB)**

(54) **IMAGE PROCESSING METHOD FOR ACCELERATING DENOISING PROCESS AND ELECTRONIC DEVICE FOR PERFORMING THE SAME**

(57)　　An image processing method, including: providing an image including noise to a diffusion generative model; and acquiring a restored image in which the noise is reduced by performing a denoising process on the image using the diffusion generative model, wherein the denoising process includes a plurality of processing steps, and wherein the acquiring of the restored image includes, in a first processing step, acquiring a feature map using the diffusion generative model, storing the feature map in memory, and based on a transformation determination parameter value associated with the second processing step being greater than a threshold value: in a second processing step, transforming a feature value included in the feature map stored in the memory based on a transformation parameter value associated with the second processing step, and in a third processing step, providing the feature map including the transformed feature value to the diffusion generative model.

**FIG. 3**

EP 4 776 227 A1

## Description

background

Field

The present disclosure relates to a denoising processing technique for reducing noise in an image, and an image processing technique using a generative model.

Description of the Related Art

Since the introduction of artificial intelligence (AI) model technology, development and research on AI models have rapidly progressed. Among various AI models, a generative AI model may be used to generate new data based on a given input. Some examples of generative AI models may include a generative pre-trained transformer (GPT), which may refer to a model that generates new text based on given text, and a generative adversarial network (GAN), which may refer to a model in which two networks compete with each other to generate increasingly realistic images.

A diffusion model may refer to a model that generates target data while gradually removing noise from data. The diffusion model may be learned or trained using a process including first gradually adding noise to original data to generate a complex random state, and then gradually removing noise while restoring the original data. The diffusion model may be used in image processing tasks, such as image denoising to reduce noise in an image, generating an image from text input, or performing image inpainting to fill in or restore missing parts of an image.

summary

In accordance with an aspect of the disclosure, an image processing method performed by an electronic device includes: providing an image including noise to a diffusion generative model; and acquiring a restored image in which the noise is reduced by performing a denoising process on the image using the diffusion generative model, wherein the denoising process includes a plurality of processing steps including a first processing step, a second processing step subsequent to the first processing step, and a third processing step subsequent to the second processing step, and wherein the acquiring of the restored image includes, in the first processing step, acquiring a feature map corresponding to an input of the diffusion generative model using the diffusion generative model, storing the feature map in memory, and based on a transformation determination parameter value associated with the second processing step being greater than a threshold value: in the second processing step, transforming a feature value included in the feature map stored in the memory based on a transformation parameter value associated with the second processing step, and in the third processing step, providing the feature map including the transformed feature value to the diffusion generative model.

Preferably, the restored image is acquired by performing only some processing steps selected from the plurality of processing steps included in the denoising process.

Preferably, a number of times that a processing step is performed in the some processing steps corresponds to a target number.

Preferably, the transforming of the feature value of the feature map includes linearly transforming or nonlinearly transforming the feature value of the feature map based on the transformation parameter value.

Preferably, the diffusion generative model includes a transformer model, the transformer model includes an attention block and a feedforward block, and the attention block is configured to output a first feature map, and the feedforward block is configured to output a second feature map.

Preferably, the storing of the feature map in the memory includes storing the first feature map and the second feature map in the memory.

Preferably, a first transformation determination parameter value is determined for the attention block and a second transformation determination parameter value is determined for the feedforward block in each of the plurality of processing steps, and the acquiring of the restored image includes: determining whether to transform the first feature map acquired in the first processing step based on the first transformation determination parameter value, in the second processing step, and determining whether to transform the second feature map acquired in the first processing step based on the second transformation determination parameter value, in the second processing step.

Preferably, the acquiring of the restored image includes: based on the transformation determination parameter value associated with the second processing step being less than or equal to the threshold value in the second processing step, providing the feature map stored in the memory to the diffusion generative model in the third processing step.

In one or more general aspects, a computer program comprising instructions which, when the program is executed by a computer, cause the computer to carry out the steps of any one, any combination, or all of operation and/or methods described herein.

In accordance with an aspect of the disclosure, an electronic device includes: a processor; and memory configured to store instructions, wherein the instructions, when executed by the processor, cause the electronic device to: provide an image including noise to a diffusion generative model, and acquire a restored image in which the noise is reduced by performing a denoising process on the image using the diffusion generative model, wherein the denoising process includes a plurality of processing steps including a first processing step, a second processing step subsequent to the first processing step, and a third processing step subsequent to the second processing step, and wherein the instructions, when executed by the processor, cause the electronic device to, based on the electronic device acquiring the stored image: in the first processing step, acquire a feature map corresponding to an input of the diffusion generative model using the diffusion generative model, store the feature map in the memory, and based on a transformation determination parameter value associated with the second processing step being greater than a threshold value: transform a feature value included in the feature map stored in the memory based on a transformation parameter value associated with the second processing step in the second processing step, and provide the feature map including the transformed feature value to the diffusion generative model in the third processing step.

Preferably, the instructions, when executed by the processor, further cause the electronic device to: acquire the restored image by performing only some processing steps selected from the plurality of processing steps included in the denoising process.

Preferably, a number of times that a processing step is performed in the some processing steps corresponds to a target number.

Preferably, the instructions, when executed by the processor, further cause the electronic device to: linearly transform or nonlinearly transform the feature value of the feature map based on the transformation parameter value.

Preferably, the diffusion generative model includes a transformer model, the transformer model includes an attention block and a feedforward block, and the attention block is configured to output a first feature map, and the feedforward block is configured to output a second feature map.

Preferably, the instructions, when executed by the processor, further cause the electronic device to: store the first feature map and the second feature map in the memory.

Preferably, a first transformation determination parameter value is determined for the attention block and a second transformation determination parameter value is determined for the feedforward block in each of the plurality of processing steps, and the instructions, when executed by the processor, further cause the electronic device to: determine whether to transform the first feature map acquired in the first processing step based on the first transformation determination parameter value, in the second processing step, and determine whether to transform the second feature map acquired in the first processing step based on the second transformation determination parameter value, in the second processing step.

Preferably, the instructions, when executed by the processor, further cause the electronic device to: based on the transformation determination parameter value for the second processing step being less than or equal to the threshold value in the second processing step, provide the feature map stored in the memory to the diffusion generative model in the third processing step.

In accordance with an aspect of the disclosure, an inference accelerator system includes: memory configured to store model information for implementing a diffusion generative model; cache memory; and a processor configured to perform a denoising process that reduces noise included in an input image using the diffusion generative model, wherein the denoising process includes a plurality of processing steps including a first processing step, a second processing step subsequent to the first processing step, and a third processing step subsequent to the second processing step, and wherein the processor is further configured to: in the first processing step, acquire a feature map corresponding to an input of the diffusion generative model using the diffusion generative model, store the feature map in the cache memory, and based on a transformation determination parameter value determined for the second processing step being greater than a threshold value: in the second processing step, transform a feature value of the feature map stored in the cache memory based on a transformation parameter value associated with the second processing step, and in the third processing step, provide the feature map including the transformed feature value to the diffusion generative model.

Preferably, the diffusion generative model includes a transformer model, and the transformer model includes an attention block and a feedforward block.

Preferably, the processor is further configured to perform only some processing steps from the plurality of processing steps included in the denoising process.

Preferably, the processor is further configured to linearly transform the feature value of the feature map based on the transformation parameter value, and the linearly transformed feature value is stored in the cache memory.

brief description of the drawings

The above and other aspects, features, and advantages of certain embodiments of the present disclosure will be more apparent from the following description taken in conjunction with the accompanying drawings, in which:

FIG. 1 is a diagram illustrating a configuration of an electronic device that performs a denoising process, according to an embodiment;

FIG. 2 is a diagram illustrating performing a denoising process using a diffusion generative model, according to an embodiment;

FIG. 3 is a diagram illustrating a configuration of an inference accelerator that accelerates a denoising process, according to an embodiment;

FIG. 4 is a diagram illustrating a learning process of a denoising process, according to an embodiment;

FIG. 5 is a diagram illustrating caching a feature map generated from a diffusion generative model, according to an embodiment;

FIG. 6 is a diagram illustrating performing transformation processing on a cached feature map, according to an embodiment;

FIG. 7 is a diagram illustrating performing transformation processing on a feature map based on a feature map generated from a diffusion generative model and a cached feature map, according to an embodiment;

FIG. 8 is a diagram illustrating caching and transformation for a feature map according to a processing step, according to an embodiment;

FIGS. 9 and 10 are flowcharts illustrating operations of an image processing method for performing a denoising process, according to an embodiment; and

FIG. 11 is a block diagram illustrating a configuration of an inference accelerator system that performs a denoising process, according to an embodiment.

detailed description

The following detailed structural or functional description is provided as an example only and various alterations and modifications may be made to the described embodiments without departing from the scope of the disclosure. Accordingly, embodiments of the disclosure are not construed as limited to the particular embodiments described herein, and should be understood to include all changes, and replacements within the idea and the technical scope of the disclosure.

Although terms such as "first" or "second" may be used to explain various components, the components are not limited to the terms. These terms should be understood only to distinguish one component from another component. For example, a first component may be referred to as a second component, and similarly, the second component may also be referred to as the first component.

It will be understood that when a component is referred to as being "connected to" or "coupled" to another component, the component may be directly connected or coupled to the other component, or other intervening components may be present.

As used herein, the singular forms "a," "an," and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

As used herein, expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, or all of a, b, and c.

As used in connection with embodiments of the disclosure, the term "module" may include a unit implemented in hardware, software, or firmware, and may interchangeably be used with other terms, for example, "logic," "logic block," "part," or "circuitry." A module may be a code block that performs a predetermined function or task, and may configure a larger program or a software system through interaction with other modules. Alternatively, a module may refer to a hardware component or device capable of performing a function independently, and such a module may be combined with other hardware to form a whole system. A module may be a single integral component, or a minimum unit or part thereof, adapted to perform one or more functions. For example, according to an embodiment, the module may be implemented in the form of an application-specific integrated circuit (ASIC).

At least one of the operations described in the embodiments of the present disclosure may be performed simultaneously or in parallel with other operations, and the order of the operations may be changed. In addition, at least one of the operations may be omitted, or another operation may be additionally performed.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments are described in detail with reference to the accompanying drawings. When describing the embodiments with reference to the accompanying drawings, like reference numerals refer to like elements and any repeated description related thereto will be omitted.

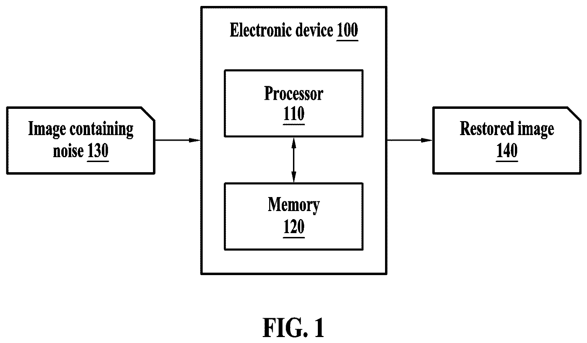

FIG. 1 is a diagram illustrating a configuration of an electronic device that performs a denoising process, according to an embodiment.

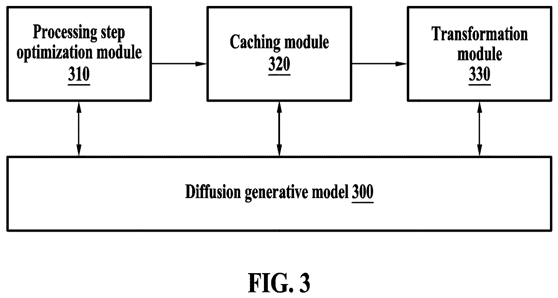

Referring to FIG. 1, an electronic device 100 may perform a denoising process that reduces noise in a given image. When an image 130 containing noise is provided, the electronic device 100 may generate a restored image 140 in which the noise is reduced in comparison to the image 130 by performing a denoising process on the image 130 using a diffusion generative model (e.g., a diffusion generative model 300 of FIG. 3). The diffusion generative model may be used when performing the denoising process, and may also be used when generating an image from a text input or when filling or restoring a missing part of an image.

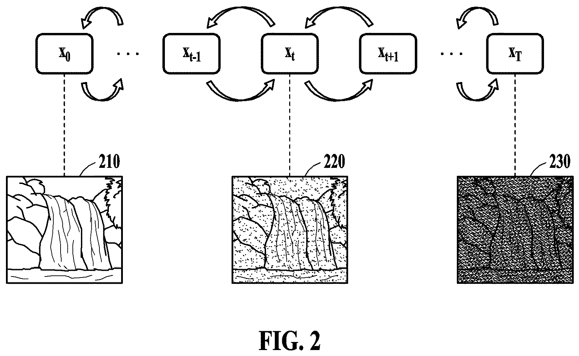

The diffusion generative model may be, or may include, a deep learning-based generative model that progressively generates images. The diffusion generative model may be a model trained based on a forward diffusion process that gradually adds noise to an original image to generate a noisy image, and a backward diffusion process that gradually removes noise from a noisy image to restore the original image. The diffusion generative model may be, for example, a transformer-based diffusion generative model. The transformer-based diffusion generative model may learn an entire pattern through self-attention and provide a high-quality generation result for an image. The transformer-based diffusion generative model may be, but is not limited to, a diffusion transformer (DiT), which performs diffusion via a transformer, or a model which combines DiT and a deterministic diffusion implicit model (DDIM), which may be defined as a DiT-XL DDIM. The diffusion generative model may also be implemented as a generative model that includes an encoder, a denoising model (or a denoising network), and a decoder. An example of the diffusion generative model is described in more detail with reference to FIG. 2.

The electronic device 100 may accelerate an inference process using the diffusion generative model. The inference process may be a process of inferring the restored image 140 in which noise is reduced from the image 130 containing noise. During the inference process, a denoising process may be performed on the image 130 containing noise to generate the restored image 140 in which the noise is reduced. The electronic device 100 may reuse or transform (e.g., linearly transform or nonlinearly transform) a feature map generated in the inference process. To reuse the feature map, a caching technique may be used to store the feature map generated in a previous step in memory 120 and load the feature map stored in the memory 120 in a next step. The amount of computation used to compute the feature map may be reduced by reusing or transforming the feature map. The feature map may be an intermediate representation of the input data of the diffusion generative model, and may include a feature value that includes a vector value output from each block or each layer of the diffusion generative model. Among the blocks of the diffusion generative model, a feature map output from a block in a previous step may be passed on to a block in the next step to generate increasingly higher-dimensional feature maps. In addition, the electronic device 100 may accelerate the inference process of the diffusion generative model while maintaining high quality of the restored image 140 by optimizing processing steps of the denoising process in the inference process of the diffusion generative model. Optimizing the processing steps may include reducing the amount of computation required during the inference process by performing only a selected portion of the processing steps included in the denoising process, rather than performing all the processing steps included in the denoising process, wherein this selected portion may refer to some processing steps as mentioned below. As the amount of computation used in the inference process is reduced, the power consumption of the electronic device 100 may be reduced, thereby improving power efficiency, and the speed of the inference process using the diffusion generative model may be increased. As used herein, the term "processing step" may be correspond to a "processing stage" or "time step" indicating a processing step.

The method for accelerating the inference process described above may be used in combination with other inference acceleration techniques such as quantization and/or pruning. Quantization may refer to a technique that increases computational speed and reduces memory usage by reducing the representation scheme of data or number of representation bits of data, and pruning may refer a technique that reduces the amount of computation by setting small weights to a value of zero ("0") in artificial intelligence (AI) models such as transformers or by not using specific components (e.g., layers, neurons, blocks) of AI models to reduce the amount of computation and improve inference speed.

The electronic device 100 may include a processor 110 and the memory 120. The electronic device 100 may include other components in addition to these components. For example, the electronic device 100 may further include at least one of a display circuit for outputting the image 130 containing noise or the restored image 140 and a communication circuit for communicating with another device.

The processor 110 may execute a program or software to control other components (e.g., a hardware or software component) of the electronic device 100 connected to the processor 110, and may perform a variety of data processing or operations. As at least part of data processing or operations, the processor 110 may process instructions and data stored in the memory 120 and store result data after processing in the memory 120. The processor 110 may perform an operation of the electronic device 100 described herein or an algorithm corresponding to the operation. The processor 110 may be a hardware-implemented data processing apparatus including a circuit having a physical structure to execute desired operations. For example, the desired operations may be implemented by code or instructions included in a program.

The processor 110 may include at least one of a main processor (e.g., a central processing unit (CPU) or an application processor) and an auxiliary processor (e.g., a graphics processing unit (GPU), a neural processing unit (NPU), an image signal processor, a sensor hub processor, or a communications processor) that may operate independently from, or in conjunction with the main processor. The processor 110 may be implemented as a system on chip (SoC) or an integrated circuit (IC) configured to perform processing. The auxiliary processor may be implemented separately from the main processor or as a part of the main processor. The processor 110 may include one or more processors, and the operations of the electronic device 100 described herein may be performed by one processor or by a combination of multiple processors.

A processor as described herein may include a processing circuit or a plurality of processors. For example, the term "processor" may refer to or include various processing circuits including at least one processor, in which the at least one processor may be configured to perform the various functions described herein in a distributed manner individually and/or collectively. When a processor is described herein as performing a plurality of operations (or functions), this includes, but is not limited to, situations in which a single processor performs all of the operations and situations in which one processor performs some of the plurality of operations and another processor performs other operations.

The memory 120 may store data used by at least one component (e.g., the processor 110) of the electronic device 100. The data may include, for example, input data and output data for software, instructions related thereto, feature maps acquired from a diffusion generative model, and data (e.g., transformation determination parameter values, transformation parameter values) related to the diffusion generative model. The memory 120 may store instructions executable by the processor 110. The memory 120 may include one or more memories, and instructions for controlling the processor 110 to perform operations of the electronic device 100 described herein may be stored in one memory or may be divided and stored in multiple memories. The memory 120 may include at least one of a volatile memory and a non-volatile memory. The memory 120 may include main memory such as, for example, dynamic random access memory (DRAM) and cache memory. The instructions, when executed by the processor 110, may cause the electronic device 100 to perform various operations of the electronic device 100 described herein.

The image 130 containing noise may be provided during the inference process. The electronic device 100 may provide the image 130 containing noise to a diffusion generative model. Providing the image 130 to the diffusion generative model may include inputting the image 130 to the diffusion generative model. The image 130 may correspond to an input image of the electronic device 100 or the diffusion generative model. The electronic device 100 may acquire the restored image 140 in which the noise is reduced compared to (or in comparison with) the image 130 by performing a denoising process that reduces noise in the image 130 provided to the diffusion generative model. The denoising process may include inputting an output of the diffusion generative model to the diffusion generative model and acquiring an output from the diffusion generative model again (e.g., acquiring a new output from the diffusion generative model). In the denoising process, the above-described process may be iteratively performed. The denoising process may include a plurality of processing steps. Each processing step may correspond to a process of acquiring an output using a diffusion generative model. As the processing steps are performed, noise in the image 130 may be gradually reduced, and the image 130 may gradually change into the restored image 140.

In an embodiment, the electronic device 100 may perform processing steps of an optimized denoising process to accelerate an inference process using the diffusion generative model. The electronic device 100 may acquire the restored image 140 by performing some (e.g., only some) processing steps selected from among all the processing steps included in the denoising process, wherein the some processing steps represent a deliberately chosen, limited, amount of processing steps. Put differently, some processing steps refers to the possibility that only a portion of the total amount processing steps is performed in the denoising process. A number of times a processing step is performed by the selected some processing steps may correspond to a target number, for example a target number of times a processing step is performed. The target number of times the processing step is performed may indicate a desired number of times a processing step is performed. The target number of times the processing step is performed may be a preset or predetermined value, but is not limited thereto. For example, when there are one hundred processing steps in total in the denoising process using the diffusion generative model and the target number of times the processing step is performed is forty, the forty selected processing steps out of the one hundred processing steps may be performed. In other words, the full set of available processing steps for denoising is not always executed. Instead, a specific quantity of these steps, referred to as a "target number," is predefined or desired. This target number dictates how many of the total processing steps will actually be performed. For instance, if the denoising process inherently comprises one hundred processing steps, but the system is configured to operate with a target number of forty, then only forty specific processing steps out of the original one hundred will be selected and performed. The processing steps performed in the process of acquiring the restored image 140 may be pre-selected in a learning process of the denoising process that determines which processing steps will be (or should be) performed based on the target number of times the processing step is performed among all the processing steps. In the inference process, the processing steps selected in the learning process may be performed for the denoising process on the image 130.

The portion of the processing steps performed in the denoising process may be selected based on a preference value of each of all the processing steps determined during the learning process of the denoising process. During the learning process, a preference value indicating a likelihood index of each processing step being performed for the denoising process may be set (or determined) for each processing step. When a preference value of a processing step is high, the likelihood (or probability) of the processing step being performed in the process of acquiring the restored image 140 may be high, and when the preference value is low, the likelihood of the processing step being performed may be low. The electronic device 100 may select a number of processing steps corresponding to the target number (e.g., the target number of times the processing step is performed) in descending order of the preference value set for each of all the processing steps. Put differently, the selection of the portion of, or some, processing steps to be performed in the denoising process is determined by assigning a preference value to each individual processing step from the entire set of available processing steps. These preference values are not static; instead, they are determined during a learning process of the denoising process. During this learning phase, each processing step is evaluated, and a corresponding preference value is generated, which functions as a likelihood index that quantifies the estimated importance or effectiveness of that particular processing step, indicating the probability or likelihood that performing a given step will contribute positively to the denoising outcome and the quality of the restored image. Consequently, a direct correlation exists: a high preference value signifies a high likelihood (or probability) of that step being performed in the inference process for acquiring the restored image 140, suggesting its criticality, while a low preference value indicates a low likelihood of performance, implying less significance. To finalize the selection, the electronic device 100 utilizes these learned preference values in conjunction with a predetermined target number, which specifies the desired total amount of processing steps to be executed, i.e. the some processing steps; the device identifies all processing steps and their associated preference values, then ranks them in order based on these preference values, and from this ordered list, may select the top processing steps until the target number is reached, thereby enabling that the most impactful or likely beneficial processing steps, as identified during the learning process, are prioritized and included in the accelerated denoising operation.

As described above, the electronic device 100 may reuse or modify a feature map generated during the inference process. The electronic device 100 may acquire a feature map corresponding to an input of the diffusion generative model by using the diffusion generative model in a first processing step of the processing steps. The diffusion generative model may include a transformer model (e.g., a transformer) including an attention block and a feedforward block. The attention block and the feedforward block may each output a feature map. For example, the attention block may output a first feature map, and the feedforward block may output a second feature map. The attention block may perform an operation based on a self-attention mechanism. For example, the attention block may transform input data of the attention block into a query Q, a key K, and a value V, and calculate an importance by a dot product of the query Q and the key K. The attention block may normalize weights using softmax and multiply the value V by the weights to generate output data. The feedforward block may transform an input of the feedforward block using a fully-connected layer and add nonlinearity using an activation function (e.g., a rectified linear unit (ReLU)). The transformer model may further include a residual block positioned between the attention block and the feedforward block. The residual block may add an output value from a previous block (e.g., an attention block) and an input value of the previous block and provide the added value to the next block (e.g., a feedforward block) according to a residual connection. The diffusion generative model may generate a feature map in which noise is reduced by inputting the feature map to the query Q using a cross attention technique. The diffusion generative model may calculate a correlation between the query Q and the key K including matrices of vectors corresponding to the input image in the form of a probability distribution. The diffusion generative model may generate an image in which noise is reduced corresponding to the feature map by adding the correlation between the query and the value to the feature map through the correlation in the form of a probability distribution and the dot product between the values according to the cross attention technique.

The electronic device 100 may store the feature map acquired in the first processing step in memory. The electronic device 100 may store feature maps acquired from each of the attention block and/or feedforward block of the diffusion generative model in the memory 120 (e.g., may store the first feature map and the second feature map in the memory 120). In a second processing step subsequent to the first processing step, the electronic device 100 may compare a transformation determination parameter value determined for (or associated with) the second processing step with a threshold value. The threshold value may be a defined value or a selected value. The threshold value may be changed by a selection. A transformation determination parameter value determined for a processing step may be, for example, a constant value indicating a likelihood index of a transformation process of a feature map being performed in the corresponding processing step. The greater the transformation determination parameter value, the higher the likelihood (or probability) that the transformation process of the feature map will be performed in the corresponding processing step, and the smaller the transformation determination parameter value, the lower the likelihood that the transformation process of the feature map will be performed in the corresponding processing step. The transformation determination parameter value for each processing step may be determined during a learning process of a denoising process using a diffusion generative model. The transformation determination parameter value may be defined or determined for each processing step and also for each block that outputs a feature map in the diffusion generative model. For each of the processing steps, the transformation determination parameter value for each of the attention block and feedforward block of the diffusion generative model may be determined. For example, a first transformation determination parameter value may be determined for the attention block, and a second transformation determination parameter value may be determined for the feedforward block. The electronic device 100 may determine whether to transform the feature map of the attention block (e.g., the first feature map) acquired in the first processing step based on the transformation determination parameter value determined for the attention block (e.g,. the first transformation determination parameter value). Additionally, the electronic device 100 may determine whether to transform the feature map of the feedforward block (e.g., the second feature map) acquired in the first processing step based on the transformation determination parameter value for the feedforward block (e.g., the second transformation determination parameter value).

In an embodiment, based on the transformation determination parameter value determined for (e.g., associated with) the second processing step being greater than the threshold value, the electronic device 100 may transform (e.g., linearly transform or nonlinearly transform) a feature value of the feature map stored in the memory 120 based on a transformation parameter value determined for (e.g., associated with) the second processing step. The transformation parameter value for each of the processing steps may be determined during the learning process of the denoising process using the diffusion generative model. The transformation parameter value may include, for example, a coefficient and a constant term included in an equation that linearly transforms a feature value of a feature map. When the transformation formula is $y = a \times x + b$ that linearly transforms an input "x" into an output "y", the transformation parameter value may be a coefficient "a" and a constant term "b". The coefficient "a" may be referred to as a slope, and the constant term "b" may be referred to as a bias. The electronic device 100 may acquire the linearly transformed feature value "y" by inputting the feature value of the feature map as the input "x" in the linear transformation equation described above.

For each processing step, and also for each block (e.g., attention blocks, feedforward blocks) that outputs a feature map in the diffusion generative model, coefficients and constant terms may be defined. In a third processing step subsequent to the second processing step, the electronic device 100 may provide a feature map including the transformed feature value to the diffusion generative model. Based on the transformation determination parameter value determined for the second processing step in the second processing step being less than or equal to the threshold value, the electronic device 100 may provide the feature map stored in the memory 120 to the diffusion generative model in the third processing step. Based on the transformation determination parameter value for the attention block of the diffusion generative model being greater than the threshold value and the transformation determination parameter value for the feedforward block being less than or equal to the threshold value, the electronic device 100 may transform the feature map of the attention block stored in the memory 120 and provide the transformed feature map as an input to an attention block in the next processing step, and may provide the feature map of the feedforward block stored in the memory 120 as an input to a feedforward block in the next processing step without a transformation process. In the third processing step, a process of generating and inferring a feature map through calculations in the attention block and feedforward block of the diffusion generative model and storing the generated feature map may be performed, or a process of reusing and/or transforming the feature map may be performed based on transformation determination parameter values and transformation parameter values determined for the third processing step. The first processing step, the second processing step, and the third processing step may be included in a portion of processing steps selected according to the optimization of the processing steps for a denoising process.

As described above, the electronic device 100 may reuse the feature map stored in the memory 120 as an input to at least one of the attention block and the feedforward block in a portion of the processing steps of the denoising process, or may transform the feature map stored in the memory 120 and then use the transformed feature map as an input to at least one of the attention block and the feedforward block. Transforming a feature map may include, for example, transforming feature values of the feature map by applying a defined linear or nonlinear transformation equation to the feature values. By transforming and using the feature map, the performance of accelerating inference for the diffusion generative model may be improved with a relatively small amount of computation.

The electronic device 100 may be included and operated in a mobile device such as at least one of a smartphone, camera, or tablet, a smart television (TV), an augmented reality (AR)/virtual reality (VR) device, a closed-circuit television (CCTV) device, a medical imaging device, a server, a semiconductor measuring device, a personal computer (PC), a data center, and an AI accelerator. An image processing method performed by the electronic device 100 may be applied to two-dimensional (2D)/three-dimensional (3D) graphic engines, applications, autonomous driving, AI-based image generation, and neural codecs, but embodiments are not limited thereto. The processor 110 of the electronic device 100 may be implemented as at least one of an SoC and an intellectual property (IP) component (e.g., at least one of a GPU, NPU, video processor, and display processor) within the SoC in various devices in which a generative model in the vision or multimodal field operates.

FIG. 2 is a diagram illustrating performing a denoising process using a diffusion generative model, according to an embodiment.

Referring to FIG. 2, the diffusion generative model may include a neural network model configured to generate a restored image through diffusion of noise. The diffusion generative model may include, for example, class/text encoders, a variational autoencoder, and a denoising model. The diffusion generative model may include a transformer model that acts as a denoising model. A desired restored image may be generated from an image containing noise through iterative operations of the transformer model. A variational autoencoder may perform a process of transforming an output of a denoising model into a low-dimensional space (e.g., a latent space) and then restoring the transformed output. The electronic device 100 may iteratively perform processing steps of a denoising process that reduces noise through the diffusion generative model during an inference process.

The diffusion generative model may be a model trained based on a forward diffusion process and a backward diffusion process. A process that proceeds from a time point t=0 to a time point t=T in an order of $x_0, \ldots, x_{t-1}, x_t, x_{t+1}, \ldots, x_T$ may be referred to as a forward diffusion process that generates a noisy image 230 via an intermediate image 220 by gradually adding noise to an original image 210. A process that proceeds from the time point t=T to the time point t=0 in an order of $x_T, \ldots, x_{t+1}, x_t, x_{t-1}, \ldots, x_0$ may be referred to as a backward diffusion process that restores the original image 210 (corresponding to a restored image) through the intermediate image 220 by gradually removing noise from the noisy image 230. For example, the forward diffusion process may be a process of gradually adding noise values that follow a fixed normal distribution (e.g., Gaussian distribution) to feature values of a feature map, and the backward diffusion process may be a process of gradually subtracting noise values generated by a learned normal distribution from the feature values of the feature map. The denoising model of the diffusion generative model may be trained to predict noise applied to the original image 210.

The electronic device 100 may restore the original image 210 with little or no noise from the noisy image 230 by iteratively performing the backward diffusion process of the diffusion generative model a predetermined number of times. Here, each backward diffusion process may correspond to the processing step described above. The backward diffusion process that is iteratively performed may be included in the denoising process. The iteration count of the backward diffusion process performed may be determined during a learning process of the denoising process or may be determined empirically.

The electronic device 100 may perform only some of the backward diffusion processes selected during the learning process of the denoising process among all backward diffusion processes. For example, when the backward diffusion process (e.g., in the order of $x_T, \ldots, x_{t+1}, x_t, x_{t-1}, \ldots, x_0$) includes a total of one thousand processing steps, and it is determined that one hundred processing steps are to be performed in the learning process, the electronic device 100 may perform only those one hundred processing steps among the one thousand processing steps. As diffusion generative models used for image generation grow larger and require a large number of processing steps, there may be a growing need to increase the speed of the inference process for image generation and reduce the amount of computation. The electronic device 100 may reduce the amount of computation required for image restoration and accelerate the image restoration process by performing an optimized denoising process that performs only some selected processing steps among all the processing steps as described above. For example, the electronic device 100 may not perform operations of a transformer for inference in some processing steps, but may use a caching technique to store feature maps calculated in a previous processing step in memory (e.g., the memory 120 of FIG. 1), and in the next processing step, the electronic device 100 may determine whether to use the feature maps stored in the memory unmodified as inputs to an attention block or feedforward block of the transformer, or to transform (e.g., linearly or nonlinearly) the feature maps stored in the memory and use the transformed feature maps as inputs to an attention block or feedforward block of the transformer. Feature maps generated from the attention block and feedforward block of the transformer model may be known to have high similarity between adjacent processing steps. Therefore, in place of performing the operations of the transformer for inference every time in each processing step, the electronic device 100 may reduce the amount of computation of the transformer model, which may account for most of the computation of the denoising model, by storing and reusing the feature maps generated in the previous processing step using the caching technique, thereby accelerating the image restoration process.

FIG. 3 is a diagram illustrating a configuration of an inference accelerator that accelerates a denoising process, according to an embodiment.

Referring to FIG. 3, an inference accelerator configured to accelerate a denoising process using a diffusion generative model 300 may include a processing step optimization module 310, a caching module 320, and a transformation module 330. The inference accelerator may reduce an amount of computation, power consumption, and heat generation by accelerating the denoising process. Operations of each of the processing step optimization module 310, the caching module 320, and the transformation module 330 of the inference accelerator may be performed by the processor 110 of FIG. 1. The diffusion generative model 300 may be a pre-trained diffusion generative model and may include a transformer model.

The processing step optimization module 310 may select processing steps to be performed to reduce image noise during an inference process using the diffusion generative model 300. The processing step optimization module 310 may perform some (e.g., only some) processing steps selected from all the processing steps defined in (e.g., included in) the denoising process. A number of times that a processing step is performed by the selected processing steps may correspond to a target number (e.g., a target number of times for performing a processing step). The target number may be a predetermined value or a variable value. When the target number is a value predetermined during a learning process of the denoising process and the target number is S, the processing step optimization module 310 may determine to perform the denoising process by selecting only S processing steps determined during the learning process from among all M processing steps included in the denoising process, where S is less than M. During the learning process, S specific processing steps from among all of the M processing steps may also be determined. The processing step optimization module 310 may accelerate the denoising process while maintaining high performance by performing some processing steps optimized for the denoising process.

In an embodiment, the inference accelerator may be used in an on-device state, in which case the inference accelerator may be adapted to change the target number of times for performing a processing step based on a given instruction (e.g., an input prompt) and/or execution environment. For example, the target number may change depending on the input prompt, and the target number may be set to a relatively small value when available computing resources are insufficient. The target number may be changed in real time.

In an embodiment, a preference value may be determined for each of the processing steps (e.g., each of the M processing steps) during the learning process of the denoising process. When the target number of times for performing a processing step is selected as a variable value V (less than the number M of all the processing steps), the processing step optimization module 310 may select a number of processing steps corresponding to the target number V in descending order of the preference value set for each of all the processing steps. When there are processing steps that are necessary for the denoising process, the processing step optimization module 310 may select remaining processing steps excluding the necessary processing based on the preference value among all the processing steps. When the target number is V and the number of necessary processing steps is R, the processing step optimization module 310 may select a number of processing steps equal to the number V-R from among all M processing steps based on the preference value. In this case, the remaining processing steps may be selected in descending order of the preference value, but embodiments are not limited thereto.

The caching module 320 may cache feature maps generated by the diffusion generative model 300 in a portion of the processing steps selected by the processing step optimization module 310. The caching module 320 may perform an inference process using the diffusion generative model 300 for each k (where k is a natural number greater than or equal to two ("2")) processing steps selected to be performed for the denoising process, for example, and cache feature maps generated by each of the attention block and feedforward block of the transformer model included in the diffusion generative model 300. Caching may include storing the feature maps generated by the attention block and the feedforward block in memory (e.g., the memory 120 of FIG. 1). Cached feature maps may be reused in the next processing step.

The transformation module 330 may determine whether to use the stored feature map as is (e.g., the unmodified feature maps) or to use the stored feature map after transformation (e.g., the transformed feature maps), when reusing the feature map. The transformation module 330 may transform a feature value of a feature map stored in the memory 120 based on a transformation parameter value determined for the processing step, for example, based on a transformation determination parameter value determined for the processing step being greater than a threshold value, and use the transformed feature value as an input for the diffusion generative model 300 in the next processing step. The transformation may include linear transformation or nonlinear transformation, but the type of transformation is not limited thereto. The transformation determination parameter value and transformation parameter value for each of the processing steps may be determined during the learning process of the denoising process using the diffusion generative model 300. Based on the transformation determination parameter value determined for a processing step being less than or equal to a threshold value, the transformation module 330 may use the feature map stored in the memory as is (without transformation) as an input of the diffusion generative model in the next processing step.

Through the operations of the caching module 320 and the transformation module 330 described above, the calculation of feature maps performed in the diffusion generative model 300 may be reduced, thereby accelerating the denoising process.

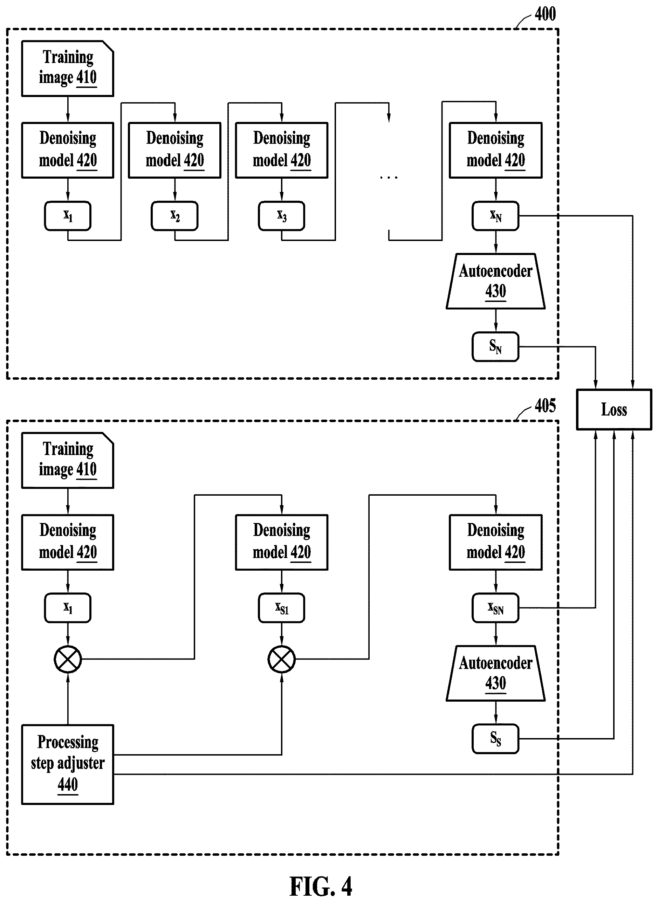

FIG. 4 is a diagram illustrating a learning process of a denoising process, according to an embodiment.

Referring to FIG. 4, in a learning process of a denoising process, processing steps to be performed in an inference process using a diffusion generative model (e.g., the diffusion generative model 300 of FIG. 3) may be selected, and parameter values (e.g., preference values for each processing step, transformation determination parameter values, and transformation parameter values) required for inference may be determined. The learning process may be performed by at least one of an electronic device (e.g., the electronic device 100 of FIG. 1), a processing step optimization module (e.g., the processing step optimization module 310 of FIG. 3), and another device (e.g., a server) described herein. The learning process may be performed based on a learning algorithm. Learning algorithms may include, but are not limited to, for example, supervised learning, unsupervised learning, semi-supervised learning, and reinforcement learning.

In the learning process of the denoising process, optimal processing steps to be performed in the inference process may be selected from all the processing steps of the denoising process. For example, during the learning process, it may be determined how many times a processing step performing a noise reduction process is to be performed and how an interval between the processing steps is to be set. A number of selected processing steps may be less than a total number of processing steps.

The process of selecting the optimal processing steps to be performed during the inference process may be a process of selecting processing steps to be used for noise reduction processing during the inference process. When noise is generated in M steps during learning using a diffusion generative model, and in the inference process, the goal may be to select S processing steps (corresponding to a target number of times for performing a processing step) to perform the denoising process, and a number N which satisfies a relation $M >= N > S$, may be selected. According to embodiments, N may be a predetermined value or a selected value that satisfies the relation. For example, N may be adjusted depending on the quality of a restored image depending on a learning environment or a number of processing steps. For example, when M is one thousand and S is three hundred, N may be selected as a number greater than three hundred and less than or equal to one thousand. In the learning process, a processing step adjuster 440 may be trained based on a result of comparing an inference result through N processing steps with an inference result through S processing steps. The processing step adjuster 440 may learn preference values and/or loss weights for each processing step in a denoising process using a denoising model 420 of the diffusion generative model. In the learning process, a total of 2N parameters including N preference values and N weights may be learned. The processing step adjuster 440 may also be referred to as a processing step router. The denoising model 420 may be pre-trained.

The processing step adjuster 440 may output a preference value for each processing step included in all the processing steps (e.g., all M processing steps). The preference value may be a likelihood index of each processing step being performed for the denoising process. When a preference value of a processing step is high, the likelihood of the processing step being performed in a process of acquiring a restored image may be high, and when a preference value is low, the likelihood of the processing step being performed may be low.

In a first process 400, noise reduction processing using the denoising model 420 may be iteratively performed on a given training image 410. The training image 410 may be an image containing noise (e.g., an image full of noise). By performing noise reduction processing using the denoising model 420 for N processing steps of the denoising process, a first-first output $x_N$ may be acquired. Performing noise reduction processing by applying N processing steps may include passing the training image 410 containing noise through the denoising model 420 N times, and then decoding the first-first output $x_N$ using an autoencoder 430. The training image 410 may be input to the denoising model 420 to acquire an output $x_1$ from the denoising model 420, and the output $x_1$ may be input again to the denoising model 420 to acquire an output $x_2$. By iterating this process, the first-first output $x_N$ may be acquired. The first-first output $x_N$ may be input to the autoencoder 430 included in the diffusion generative model, and a first-second output $S_N$ may be output from the autoencoder 430. The autoencoder 430 may decode the first-first output $x_N$ to generate the first-second output $S_N$. The autoencoder 430 may be a variational autoencoder. The autoencoder 430 may be pre-trained. The first-first output $x_N$ and the first-second output $S_N$ determined through the first process 400 may be considered as reference values.

In a second process 405, when S is the target number of times for performing a processing step, which is a desired number of times a processing step is to be performed, the processing step adjuster 440 may select S steps from among N processing steps performed in the first process 400, and the processing step adjuster 440 may be trained in the learning process. When the processing step adjuster 440 selects S processing steps according to a preference value of each processing step, noise reduction processing through the denoising model 420 may be performed only for the selected processing steps to generate a second-first output $x_{SN}$. Performing noise reduction processing by applying S (the target number of times a processing step is performed) processing steps may include passing the training image 410 containing noise through the denoising model 420 S times and then decoding the second-first output $x_{SN}$ through the autoencoder 430. When S processing steps are selected based on a preference value of each processing step, the second-first output $x_{SN}$ may be generated by passing the training image 410 containing noise through the denoising model 420 only for the selected processing steps. In the above-described process, a preference value of each processing step determined by the processing step adjuster 440 may be applied to an output of the denoising model 420 and input to the denoising model 420 in the next processing step. The second-first output $x_{SN}$ may be input to the autoencoder 430, and a second-second output $S_S$ may be output from the autoencoder 430. The autoencoder 430 may decode the second-first output $x_{SN}$ to generate the second-second output $S_S$.

In the learning process of the denoising process, the processing step adjuster 440 may be trained such that the second-second output $S_S$ becomes identical or similar to the first-second output $S_N$. According to the learning of the processing step adjuster 440, optimal processing steps corresponding to the target number of times for performing a processing step may be selected and a preference value of each processing step may be determined. The processing step adjuster 440 may assign a preference value p to N processing steps and a loss weight a to each processing step when calculating a loss. The preference value p of a processing step may be a likelihood or probability that the processing step is selected in the inference process. In an embodiment, a processing step having a preference value greater than or equal to a threshold value or a processing step that is designated to be necessarily performed during the inference process (e.g., a necessary processing step) may be performed during the inference process. Based on the preference value of a processing step being less than the threshold value, the processing step may not be performed during the inference process. In the learning process, a straight-through estimator (STE) technique, which may be used to approximate the differentiation of nonlinear functions, may be used. The STE technique may include a forward pass that applies a discrete function (e.g., quantized to zero ("0") or one ("1")) to generate an output, and a backward pass that treats the derivatives in the discrete transform as one ("1"), so that normal gradients may be used during the backward pass process. Based on the preference value of a processing step being greater than or equal to the threshold value, the forward pass may be performed, and during the backward pass, a full backward pass may be performed. Here, the threshold value may be a preference value of a processing step with an Sth highest preference value among N processing steps. When there are R (where R is a natural number greater than or equal to one ("1")) processing steps to be necessarily included, the threshold value may be designated as a preference value of a processing step with an S-Rth highest preference value among the N processing steps.

In an embodiment, a loss $Loss_f$ for training the processing step adjuster 440 may be based on a loss $Loss_x$ representing a difference between the first-first output $x_N$ and the second-first output $x_{SN}$ and a loss $Loss_s$ representing a difference between the first-second output $S_N$ and the second-second output $S_S$. For example, the loss $Loss_f$ for training the processing step adjuster 440 may be determined by Equation 1 below.

[Equation 1]

$$Loss_f = a_x \times Loss_x + a_s \times Loss_s$$

Here, $a_x$ may denote a loss weight applied to the loss $Loss_x$, and $a_s$ may denote a loss weight applied to the loss $Loss_s$. When calculating the loss $Loss_x$, a size of the loss may be scaled using the loss weight $a_x$ to adjust a degree of reflection of the loss for each processing step, and the loss weight $a_x$ may be learned together during the learning process. The processing step adjuster 440 may be trained so that the loss $Loss_f$ is minimized, and as a result of the training, a preference value for each processing step may be determined, and some processing steps corresponding to the target number may be selected. Gradient descent may be used to find processing steps and preference values that minimize the loss $Loss_f$.

After the learning process is completed, a number of processing steps and a time interval to be performed in the inference process may be determined based on a preference value of each processing step. For example, the top S (corresponding to the target number of times for performing a processing step) processing steps in order of the preference value determined for each processing step may be selected, and the denoising process may be performed based on the S selected processing steps. As another example, during the learning process, rather than the top S processing steps based on the preference values, the learning process may be learned in such a way that processing steps smaller than an average value (or weighted average value) of weights of the N processing steps are not performed, and the inference process is performed using processing steps greater than the average value. Because each processing step that performs noise reduction processing may require an operation using the denoising model 420 such as a transformer model with large parameters, the inference speed may become slower as the number of processing steps increases. Additionally, noise reduction performance may vary depending on which processing step is performed among all the processing steps. According to embodiments, noise reduction processing may be performed using only some optimally selected processing steps rather than performing all the processing steps during the inference process, thereby reducing the amount of computation without degrading the quality of a restored image compared to performing all the processing steps.

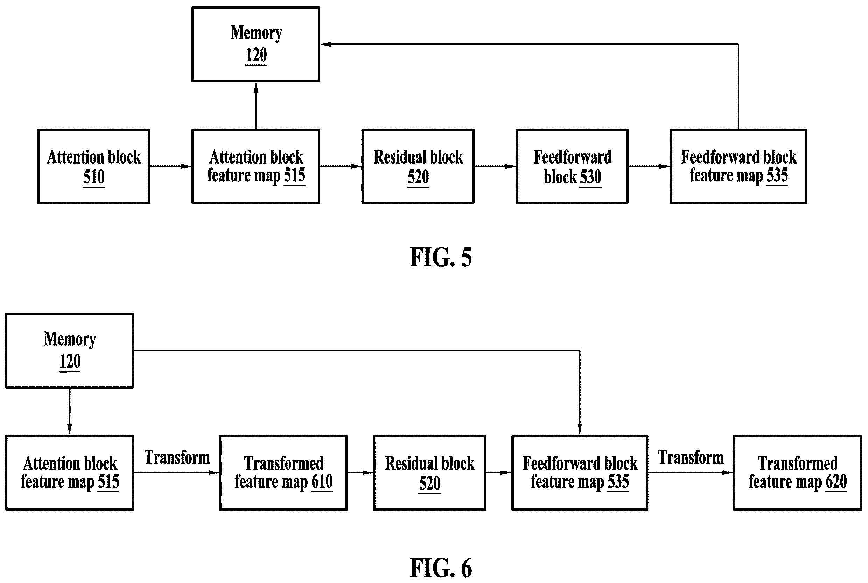

FIG. 5 is a diagram illustrating caching a feature map generated from a diffusion generative model, according to an embodiment.

Referring to FIG. 5, a diffusion generative model (e.g., the diffusion generative model 300 of FIG. 3) used in a denoising process may include a transformer model. The transformer model may perform inference on an input and provide an output. The transformer model may determine an output of a current processing step based on an input and an output of a previous processing step. The denoising process may correspond to an inference process of the diffusion generative model.

The transformer model may include an attention block 510, a residual block 520, and a feedforward block 530. The residual block 520 may be located between the attention block 510 and the feedforward block 530. The attention block 510 may correspond to multi-head self-attention that performs self-attention operations in parallel. The residual block 520 may perform at least one of a residual connection operation that adds inputs and outputs together and a layer normalization operation that performs normalization using the mean and variance. The feedforward block 530 may correspond to a feedforward neural network.

Caching for storing an attention block feature map 515 (e.g., a first feature map) and a feedforward block feature map 535 (e.g., a second feature map) described below may be performed by an electronic device (e.g., the electronic device 100 of FIG. 1) or a caching module (e.g., the caching module 320 of FIG. 3).

The attention block feature map 515 may be generated in the attention block 510 of the diffusion generative model at a particular processing step in which the inference process is performed. The attention block feature map 515 may be a feature map generated by the attention block 510. The attention block feature map 515 may be stored in the memory 120. The attention block feature map 515 may be passed to the residual block 520. In the residual block 520, at least one of a residual connection operation and a layer normalization operation may be performed on the attention block feature map 515. An output of the residual block 520 may be passed to the feedforward block 530. The feedforward block 530 may perform a feedforward operation to generate the feedforward block feature map 535. The feedforward block feature map 535 may be a feature map generated by the feedforward block 530. The feedforward block feature map 535 may be stored in the memory 120. According to an embodiment, the attention block feature map 515 generated in the attention block 510 and the feedforward block feature map 535 generated in the feedforward block 530 may be stored separately in different memory areas.

FIG. 6 is a diagram illustrating performing transformation processing on a cached feature map, according to an embodiment.

Referring to FIG. 6, a feature map (e.g., the attention block feature map 515 and/or the feedforward block feature map 535) cached in a previous processing step (which may be referred to as a "first processing step") may be used as an input of a diffusion generative model as is (e.g., unmodified or untransformed) in a next processing step (which may be referred to as a "second processing step") or may be transformed and used as an input of the diffusion generative model. Cached processing operations described below may be performed by an electronic device (e.g., the electronic device 100 of FIG. 1) or a conversion module or transformation module (e.g., the transformation module 330 of FIG. 3).

In the second processing step, the attention block feature map 515 stored in the memory 120 may be loaded, and based on a transformation determination parameter value determined for (e.g., associated with) an attention block in the second processing step, it may be determined whether to transform (e.g., linearly transform or nonlinearly transform) the attention block feature map 515 or use the attention block feature map 515 as is (e.g., unmodified or untransformed). For example, based on the determined transformation determination parameter value for the attention block being greater than a threshold value, a transformed attention block feature map 610 may be generated by feature values of the attention block feature map 515 being applied to a defined linear transformation equation. When linear transformation is performed, a linear transformation equation defined by a transformation parameter value defined in the attention block in the second processing step may be applied. The transformation parameter value may be a coefficient and a constant term of the linear transformation equation. The transformed attention block feature map 610 may be input to the attention block in the second processing step. Based on the transformation determination parameter value determined for the attention block in the second processing step being less than or equal to the threshold value, the attention block feature map 515 may be input to the attention block as is, without being transformed. Not transforming the attention block feature map 515 may include applying an identity function to the attention block feature map 515. In the example illustrated in FIG. 6, the attention block feature map 515 may be transformed and the transformed attention block feature map 610 may be generated.

The transformed attention block feature map 610 may be passed to the residual block 520. In the residual block 520, a residual connection operation and/or a layer normalization operation may be performed on the transformed attention block feature map 610. An output of the residual block 520 may be passed to a feedforward block. In the second processing step, the feedforward block feature map 535 stored in the memory 120 may be loaded, and based on a transformation determination parameter value determined for the feedforward block in the second processing step, it may be determined whether to transform (e.g., linearly transform or nonlinearly transform) the feedforward block feature map 535 or use the feedforward block feature map 535 as is (e.g., unmodified or untransformed). Based on the determined transformation determination parameter value for the feedforward block being greater than the threshold value, a transformed feedforward block feature map 620 may be generated by feature values of the feedforward block feature map 535 being applied to a defined linear transformation equation. When linear transformation is performed, a linear transformation equation defined by a transformation parameter value defined in the feedforward block in the second processing step may be applied. The transformed feedforward block feature map 620 may be input to the feedforward block in the second processing step. Based on the transformation determination parameter value determined for the feedforward block in the second processing step being less than or equal to the threshold value, the feedforward block feature map 535 may be input to the feedforward block as is, without being transformed. Not transforming the feedforward block feature map 535 may include applying an identity function to the feedforward block feature map 535.

The transformed attention block feature map 610 and the transformed feedforward block feature map 620 may be used as inputs of the attention block and the feedforward block, respectively, in a third processing step, which may be the next processing step of the second processing step (e.g., after or subsequent to the second processing step).

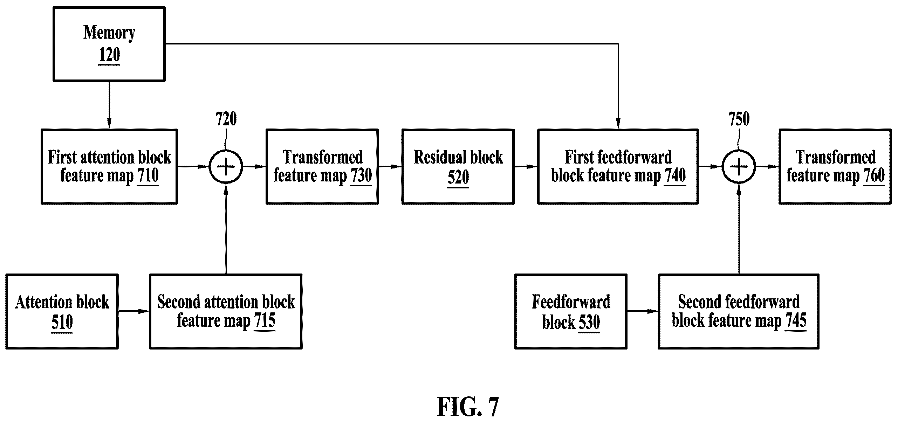

FIG. 7 is a diagram illustrating performing transformation processing on a feature map based on a feature map generated from a diffusion generative model and a cached feature map, according to an embodiment.

The example illustrated in FIG. 6 may selectively use a previously cached feature map and a transformed feature map according to defined transformation determination parameter values, whereas the example illustrated in FIG. 7 and described below may generate a transformed feature map (e.g., a transformed attention block feature map 730, a transformed feedforward block feature map 760) by combining a feature map generated from a diffusion generative model in a current processing step and a previously cached feature map. The performance of noise reduction may be further improved by generating a transformed feature map by combining a feature map generated from a diffusion generative model with a previously cached feature map. Processing operations described below may be performed by an electronic device (e.g., the electronic device 100 of FIG. 1) or a conversion module or tranformation module (e.g., the transformation module 330 of FIG. 3).

Referring to FIG. 7, a first attention block feature map 710 may be generated and cached in the attention block 510 by the inference process of the diffusion generative model in the previous processing step (which may be referred to as the "first processing step"), and a first feedforward block feature map 740 may be generated and cached in the feedforward block 530. In a next processing step (which may be referred to as the "second processing step"), the first attention block feature map 710 cached in the first processing step may be loaded from the memory 120. In the second processing step, a second attention block feature map 715 may be generated by an operation of the attention block 510. The first attention block feature map 710 and the second attention block feature map 715 may be combined using a combination operation 720 to generate the transformed attention block feature map 730. The combination operation 720 may include, for example, at least one of an average operation that calculates an average of feature values for the feature values of the first attention block feature map 710 and the feature values of the second attention block feature map 715, a weighted average operation that calculates an average by applying weights to the feature values, a sum operation that adds the feature values, a max operation that selects a greater feature value among the feature values, and a min operation that selects a smaller value among the feature values, but embodiments are not limited thereto.

The transformed attention block feature map 730 may be passed to the residual block 520. In the residual block 520, a residual connection operation and/or a layer normalization operation may be performed on the transformed attention block feature map 730. An output of the residual block 520 may be passed to the feedforward block 530. In the second processing step, the first feedforward block feature map 740 stored in the memory 120 may be loaded. In the second processing step, a second feedforward block feature map 745 may be generated by an operation of the feedforward block 530. The first feedforward block feature map 740 and the second feedforward block feature map 745 may be combined through a combination operation 750 to generate the transformed feedforward block feature map 760. The combination operation 750 may include, for example, at least one of an average operation that calculates an average of feature values for the feature values of the first feedforward block feature map 740 and the feature values of the second feedforward block feature map 745, a weighted average operation that calculates an average by applying weights to the feature values, a sum operation that adds the feature values, a max operation that selects a greater feature value among the feature values, and a min operation that selects a smaller value among the feature values, but embodiments are not limited thereto.

The transformed attention block feature map 730 and the transformed feedforward block feature map 760 may be used as inputs of the attention block 510 and the feedforward block 530, respectively, in the third processing step, which may be the next processing step of the second processing step (e.g., after or subsequent to the second processing step).

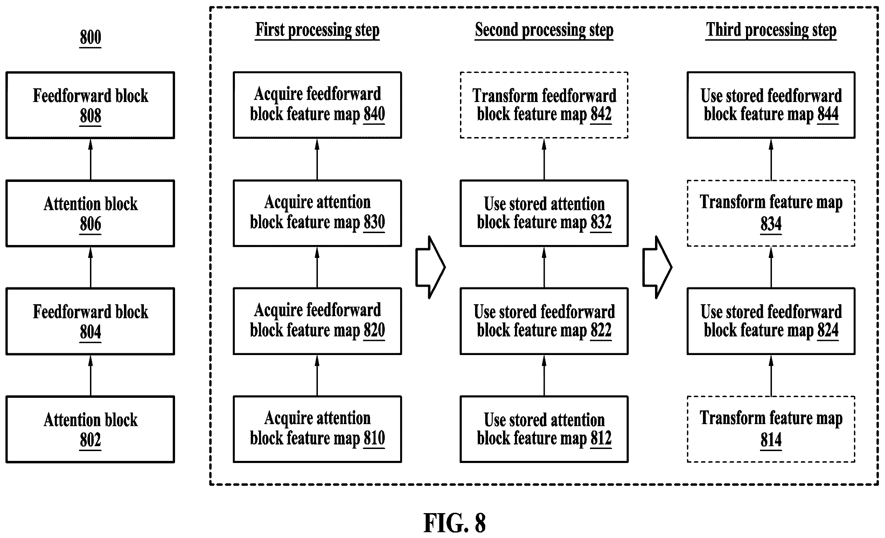

FIG. 8 is a diagram illustrating caching and transformation for a feature map according to a processing step, according to an embodiment.

Referring to FIG. 8, a diffusion generative model may include a transformer model 800 as a denoising model. The transformer model 800 may include multiple attention blocks (e.g., an attention block 802 and an attention block 806) and multiple feedforward blocks (e.g., a feedforward block 804 and a feedforward block 808). The transformer model 800 may further include a residual block positioned between an attention block and a feedforward block. The number of each of the attention blocks 802 and 806 and the feedforward blocks 804 and 808 may vary. For ease of description, an example is described in which two attention blocks 802 and 806 and two feedforward blocks 804 and 808 are used, but embodiments are not limited thereto.

An electronic device (e.g., the electronic device 100 of FIG. 1) may sequentially perform processing steps to perform a denoising process on an image containing noise to generate a restored image in which the noise is reduced. The processing steps performed may be a selected portion of all the processing steps included in the denoising process, and a number of the selected portion of processing steps may correspond to a target number of times a processing step is to be performed (e.g., a target number of times for performing a processing step). The selected portion of processing steps may include a first processing step, a second processing step subsequent to the first processing step, and a third processing step subsequent to the second processing step.

In an embodiment, the electronic device may perform an inference process once every k processing steps (where k is a natural number greater than or equal to two ("2")) for the denoising process to reduce feature map computation of the diffusion generative model. In the example illustrated in FIG. 8, k may be equal to three ("3"), but embodiments are not limited thereto. In the first processing step, an operation for inference may be performed in each of the attention blocks 802 and 806 and the feedforward blocks 804 and 808 of the diffusion generative model to generate a feature map. Using the inference process in the first processing step, the electronic device may acquire an attention block feature map from the attention block 802 at operation 810, acquire a feedforward block feature map from the feedforward block 804 at operation 820, acquire an attention block feature map from the attention block 806 at operation 830, and acquire a feedforward block feature map from the feedforward block 808 at operation 840. The electronic device may store (or cache) the attention block feature maps and feedforward block feature maps acquired from each of the attention blocks 802 and 806 and the feedforward blocks 804 and 808 in memory (e.g., the memory 120 of FIG. 1).

In the second processing step, which may be a processing step subsequent to the first processing step, the electronic device may compare a transformation determination parameter value determined for (e.g., associated with) the second processing step with a threshold value, and determine whether to use a feature map cached in the first processing step as is or to use the feature map cached in the first processing step after transformation, based on the comparison result. The threshold value may be a defined value or a selected value. The threshold value may be subject to change. The transformation determination parameter value for the second processing step may be determined during a learning process of a denoising process using the diffusion generative model. The transformation determination parameter value may be defined for each processing step and for each block that outputs a feature map in the diffusion generative model. For example, a transformation determination parameter value defined for each of the attention blocks 802 and 806 and the feedforward blocks 804 and 808 in the second processing step S2 and a transformation determination parameter value defined for each of the attention blocks 802 and 806 and the feedforward blocks 804 and 808 in the third processing step S3 may be as shown in Table 1 below.

[Table 1]

| S2 | S3 |
|-----|-----|
| 0.8 | 0.2 |
| 0.1 | 0.7 |
| 0.4 | 0.3 |
| 0.3 | 0.9 |

According to Table 1 above, in the second processing step S2, the transformation determination parameter value determined for the attention block 802 may be 0.3, the transformation determination parameter value determined for the feedforward block 804 may be 0.4, the transformation determination parameter value determined for the attention block 806 may be 0.1, and the transformation determination parameter value determined for the feedforward block 808 may be 0.8. In the third processing step S3, the transformation determination parameter value determined for the attention block 802 may be 0.9, the transformation determination parameter value determined for the feedforward block 804 may be 0.3, the transformation determination parameter value determined for the attention block 806 may be 0.7, and the transformation determination parameter value determined for the feedforward block 808 may be 0.2. The greater the transformation determination parameter value, the greater a likelihood that a transformation process of a feature map will be performed in the corresponding processing step, and the smaller the transformation determination parameter value, the less the likelihood that the transformation process of the feature map will be performed in the corresponding processing step.

In this embodiment, the threshold value may be set to 0.65. Then, in the second processing step, the transformation determination parameter value defined for the feedforward block 808 may be greater than the threshold value, and the transformation determination parameter value defined for the remaining blocks (e.g., the attention block 802, the feedforward block 804, and the attention block 806) may be less than or equal to the threshold value. In the second processing step, the electronic device may use the attention block feature map generated from the attention block 802 in the first processing step and stored in the memory for the attention block 802 at operation 812. For example, the stored attention block feature map may be provided as an input to the attention block 802 at operation 812. The electronic device may use the feedforward block feature map generated from the feedforward block 804 in the first processing step and stored in the memory for the feedforward block 804 at operation 822. The electronic device may use the attention block feature map generated from the attention block 806 in the first processing step and stored in the memory for the attention block 806 at operation 832. The electronic device may transform and use the feedforward block feature map generated from the feedforward block 804 in the first processing step and stored in the memory for the feedforward block 808 at operation 842. The transformation of the feedforward block feature map at operation 842 may include, for example, linearly transforming (or nonlinearly transforming) the feedforward block feature map generated from the feedforward block 804 in the first processing step and stored in the memory based on a transformation parameter value defined for the feedforward block 808 in the second processing step. The transformation parameter value for each of the processing steps may be determined during the learning process of the denoising process using the diffusion generative model. In the learning process of the denoising process, an objective function for learning a transformation determination parameter value and a transformation parameter value for each of the attention blocks and feedforward blocks in each processing step may be set in various ways. For example, the objective function may be set or determined based on a mean squared error between an output of the denoising model acquired by performing inference in all the processing steps of the denoising process and an output of the denoising model acquired by applying the image processing method proposed herein. Based on the objective function, the transformation determination parameter value and the transformation parameter value for each of the attention blocks and the feedforward blocks in each processing step may be determined such that the mean square error is minimized. However, this is only an example, and embodiments are not limited thereto. For example, in addition to the mean squared error, objective functions based on L1 loss, cosine similarity, or regularization schemes may also be set.

The transformation parameter value may include, for example, a coefficient and a constant term included in an equation that linearly transforms feature values of a feature map. For example, a transformation parameter value defined or determined for each of the attention blocks 802 and 806 and the feedforward blocks 804 and 808 in the second processing step S2 and a transformation parameter value defined or determined for each of the attention blocks 802 and 806 and the feedforward blocks 804 and 808 in the third processing step S3 may be as shown in Table 2 below.

[Table 2]

| First transformation parameter value (S2) | Second transformation parameter value (S2) | First transformation parameter value (S3) | Second transformation parameter value (S3) |
| --- | --- | --- | --- |
| 1.1 | 0.3 | 3.3 | 2.7 |
| -2.8 | 8.7 | -2.1 | -0.8 |
| 3.7 | 6.9 | 0.9 | 0.0 |
| -0.8 | -4.0 | 1.5 | 0.5 |

According to Table 2 above, for the second processing step S2, a first transformation parameter value (corresponding to a coefficient of a linear transformation equation) and a second transformation parameter value (corresponding to a constant term of the linear transformation equation) defined in the attention block 802 may be -0.8 and -4.0, respectively, and the first transformation parameter value and the second transformation parameter value defined in the feedforward block 804 may be 3.7 and 6.9, respectively. For the second processing step S2, the first transformation parameter value and the second transformation parameter value defined in the attention block 806 may be -2.8 and 8.7, respectively, and the first transformation parameter value and the second transformation parameter value defined in the feedforward block 808 may be 1.1 and 0.3, respectively. For the third processing step S3, the first transformation parameter value and the second transformation parameter value defined in the attention block 802 may be 1.5 and 0.5, respectively, and the first transformation parameter value and the second transformation parameter value defined in the feedforward block 804 may be 0.9 and 0.0, respectively. For the third processing step S3, the first transformation parameter value and the second transformation parameter value defined in the attention block 806 may be -2.1 and -0.8, respectively, and the first transformation parameter value and the second transformation parameter value defined in the feedforward block 808 may be 3.3 and 2.7, respectively.

According to Table 2 above, when the feedforward block feature map is linearly transformed based on the first transformation parameter value 1.1 and the second transformation parameter value 0.3 defined for the feedforward block 808 in the second processing step, the electronic device may perform a process of calculating a linearly transformed feature value y by substituting each feature value of the feedforward block feature map as x in a linear transformation equation $y = 1.1 \times x + 0.3$ on all feature values of the feedforward block feature map to acquire a linearly transformed feature map.

In the third processing step, which may be a processing step subsequent to the second processing step, the electronic device may compare a transformation determination parameter value determined for the third processing step with the threshold value, and determine whether to use a cached feature map as is or to use the cached feature map after transformation, based on the comparison result. According to Table 1 above, in the third processing step, the transformation determination parameter value defined for each of the attention block 802 and the attention block 806 may be greater than the threshold value, 0.65, and the transformation determination parameter value defined for each of the feedforward block 804 and the feedforward block 808 may be less than the threshold value.

In the third processing step, the electronic device may transform the attention block feature map cached in the second processing step for the attention block 802 at operation 814. According to Table 2 above, the first transformation parameter value and the second transformation parameter value defined in the attention block 802 for the third processing step S3 may be 1, 5, and 0.5, respectively. The electronic device may perform a process of calculating a linearly transformed feature value y by substituting each feature value of the attention block feature map as x in a linear transformation equation $y = 1.5 \times x + 0.5$ on all feature values of the attention block feature map to acquire a linearly transformed feature map. The electronic device may use the feedforward block feature map generated from the feedforward block 804 in the second processing step and stored in the memory for the feedforward block 804 at operation 824. For example, the stored feedforward block feature map may be provided as an input to the feedforward block 804 at operation 824. The electronic device may transform the attention block feature map cached in the second processing step for the attention block 806 at operation 834. According to Table 2 above, the first transformation parameter value and the second transformation parameter value defined in the attention block 806 for the third processing step S3 may be -2.1 and -0.8, respectively. The electronic device may perform a process of calculating a linearly transformed feature value y by substituting each feature value of the attention block feature map as x in a linear transformation equation $y = -2.1 \times x - 0.8$ on all feature values of the attention block feature map to acquire a linearly transformed feature map. The electronic device may use the feedforward block feature map generated from the feedforward block 808 in the second processing step and stored in the memory for the feedforward block 808 at operation 844. For example, the stored feedforward block feature map may be provided as an input to the feedforward block 808 at operation 844.

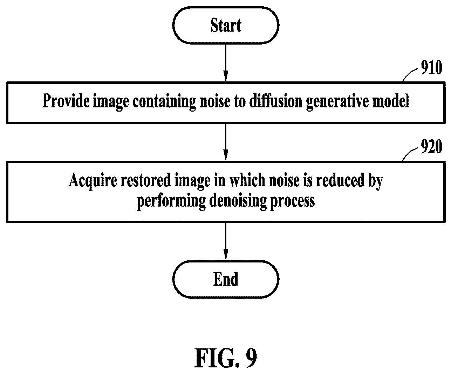

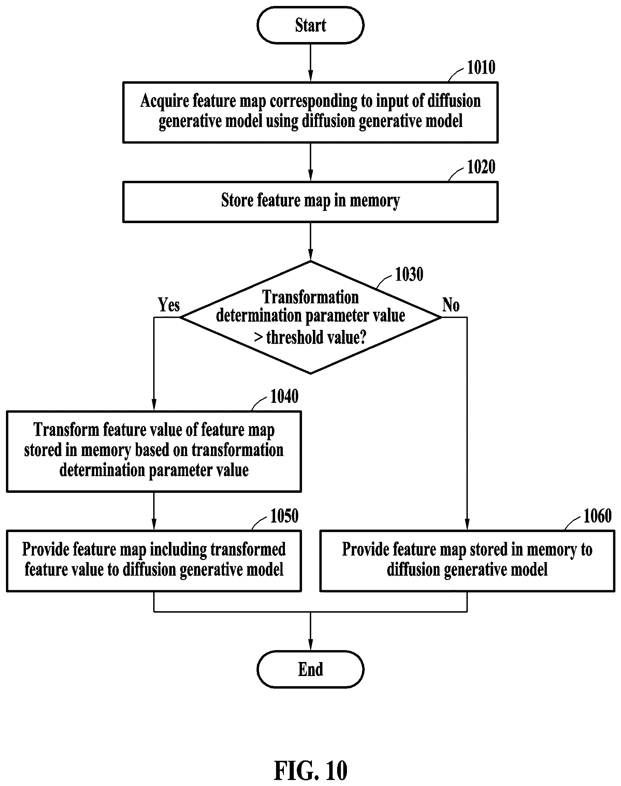

FIGS. 9 and 10 are flowcharts illustrating operations of an image processing method for performing a denoising process, according to an embodiment. The image processing method may be performed by an electronic device (e.g., the electronic device 100 of FIG. 1) described herein.

Referring to FIG. 9, at operation 910, the electronic device may provide an image containing or including noise to a diffusion generative model (e.g., the diffusion generative model 300 of FIG. 3). The electronic device may input the image containing noise to the diffusion generative model.

At operation 920, the electronic device may acquire a restored image in which the noise is reduced compared to (e.g., in comparison with) the image by performing a denoising process that reduces noise in the image provided to the diffusion generative model. The electronic device may generate a restored image in which noise is gradually reduced by iteratively performing a process of reducing image noise using an image diffusion model. The denoising process may include a plurality of processing steps, which may be a process of acquiring an output using the diffusion generative model, and the processing steps may be performed sequentially.

In an embodiment, the electronic device may acquire a restored image by performing some processing steps selected from all the processing steps defined or included in the denoising process. A number of times that a processing step is performed in the selected processing steps may correspond to a target number of times for performing a processing step. The processing steps performed in the process of acquiring the restored image may be pre-selected in a learning process of the denoising process that determines which processing steps will be performed based on the target number of times the processing step is performed among all the processing steps. In an inference process, the processing steps selected in the learning process may be performed for the denoising process on the image. The portion of the processing steps performed in the denoising process may be selected based on a preference value of each of all the processing steps determined during the learning process of the denoising process. For example, the electronic device may select a number of processing steps corresponding to the target number (e.g., a target number of times for performing the processing step) in descending order of a preference value set for each of all the processing steps. Example operations of performing the denoising process through processing steps corresponding to the target number are described in more detail below with reference to FIG. 10.

Referring to FIG. 10, at operation 1010, the electronic device may acquire a feature map corresponding to an input of the diffusion generative model by using the diffusion generative model in a first processing step among the processing steps. The diffusion generative model may include a transformer model. The transformer model may include an attention block and a feedforward block, wherein the attention block and the feedforward block may each output a feature map. For example, the attention block may output a first feature map, and the feedforward block may output a second feature map.

At operation 1020, the electronic device may store the feature map acquired in the first processing step in memory (e.g., the memory 120 of FIG. 1). The electronic device may store feature maps acquired from each of the attention block and/or feedforward block of the diffusion generative model in the memory.

At operation 1030, in a second processing step subsequent to the first processing step, the electronic device may compare a transformation determination parameter value determined for (e.g., associated with) the second processing step with a threshold value. The threshold value may be a defined value or a selectable value. The transformation determination parameter value for each processing step may be determined during a learning process of a denoising process using a diffusion generative model. The transformation determination parameter value may be defined or determined for each processing step and also for each block that outputs a feature map in the diffusion generative model. For each of the processing steps, the transformation determination parameter value for each of the attention block and feedforward block of the diffusion generative model may be determined. The electronic device may determine whether to transform a feature map of the attention block acquired in the first processing step based on the transformation determination parameter value determined for the attention block. The electronic device may determine whether to transform a feature map of the feedforward block acquired in the first processing step based on the transformation determination parameter value for the feedforward block.

Based on the transformation determination parameter value determined for (e.g., associated with) the second processing step being greater than the threshold value ("Yes" at operation 1030), at operation 1040, the electronic device may transform a feature value of the feature map stored in the memory based on the transformation determination parameter value determined for the second processing step. Transformation of the feature value may include inputting the feature value to a defined linear transformation equation or nonlinear transformation equation and acquiring a result value of the equation. The transformation determination parameter value for each processing step may be determined during a learning process of a denoising process using a diffusion generative model. The transformation determination parameter value may include, for example, a coefficient and a constant term included in an equation that linearly transforms feature values of a feature map. For each processing step, transformation parameter values may also be determined for each attention block and feedforward block that outputs a feature map in the diffusion generative model.

At operation 1050, the electronic device may provide the feature map including the feature value transformed at operation 1040 to the diffusion generative model in a third processing step subsequent to the second processing step. The diffusion generative model may generate an output by using the feature map including the transformed feature value as one of the entire input.

Based on the transformation determination parameter value determined for the second processing step in the second processing step being less than or equal to the threshold value ("No" at operation 1030), at operation 1060, the electronic device may provide the feature map stored in the memory to the diffusion generative model in the third processing step. The electronic device may input the feature map stored in the memory directly to the diffusion generative model without, for example, a linear transformation or nonlinear transformation process.

The above-described operations 1030, 1040, 1050 and 1060 may be individually performed for each attention block and feedforward block of the diffusion generative model. For example, based on the transformation determination parameter value for the attention block of the diffusion generative model being greater than the threshold value and the transformation determination parameter value for the feedforward block being less than or equal to the threshold value, the electronic device may transform the feature map of the attention block stored in the memory and provide the transformed feature map as an input to an attention block in a next processing step, and may provide the feature map of the feedforward block stored in the memory as an input to a feedforward block in the next processing step without a transformation process. Based on the transformation determination parameter value for the attention block being less than or equal to the threshold value and the transformation determination parameter value for the feedforward block being greater than the threshold value, the electronic device may provide the feature map of the attention block stored in the memory as an input to the attention block in the next processing step without a transformation process, and may provide the feature map of the feedforward block stored in the memory as an input to the feedforward block in the next processing step after transformation.

In the third processing step, a process (corresponding to the process of operations 1010 and 1020) of generating a feature map through calculations in the attention block and feedforward block of the diffusion generative model and storing the generated feature map may be performed, or a process (corresponding to the process of operations 1030 to 1060) of reusing and/or transforming the feature map may be performed based on transformation determination parameter values and transformation parameter values determined for the third processing step. The first processing step, the second processing step, and the third processing step may be included in a portion of processing steps selected according to the optimization of the processing steps for a denoising process. A series of operations described with reference to FIG. 10 may be iteratively performed until all of the selected processing steps are performed, and a restored image in which noise is reduced may be finally generated.

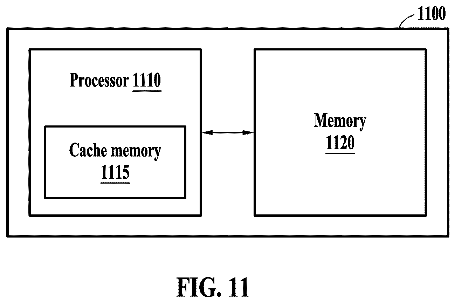

FIG. 11 is a block diagram illustrating a configuration of an inference accelerator system that performs a denoising process, according to an embodiment.

Referring to FIG. 11, an inference accelerator system 1100 may perform the denoising process that reduces noise in an image as described herein. The inference accelerator system 1100 may accelerate the denoising process using the diffusion generative model (e.g., the diffusion generative model 300 of FIG. 3).

The inference accelerator system 1100 may include a processor 1110, a cache memory 1115, and a memory 1120. The inference accelerator system 1100 may include other components in addition to the above-described components. For example, the inference accelerator system 1100 may further include communication circuitry for communicating with a display circuitry and/or other devices.

The memory 1120 may store various information (e.g., data, values) required to perform the denoising process. The memory 1120 may store model information (e.g., model parameters, program code) for implementing the diffusion generative model. The memory 1120 may store transformation determination parameter values determined for each of the processing steps and transformation parameter values determined for each of the processing steps. The memory 1120 may include a volatile memory or a non-volatile memory. The memory 1120 may include, for example, DRAM.

The cache memory 1115 may cache and store a feature map (or feature value) acquired from the diffusion generative model during an operation for denoising processing, and result data of transforming (e.g., linearly transforming or nonlinearly transforming) the feature map (or feature value). The cache memory 1115 may be included and operated within the processor 1110, but is not limited thereto, and the cache memory 1115 may also be operated outside the processor 1110.

The processor 1110 may execute a program or software to control other components of the inference accelerator system 1100 connected to the processor 1110 and perform various data processing or operations. As at least part of data processing or operations, the processor 1110 may process instructions or data stored in the memory 1120. The processor 1110 may include, for example, a CPU, a GPU, and/or an NPU. The inference accelerator system 1100 may correspond to the electronic device 100 described herein, and the processor 1110 may perform operations performed by the electronic device 100.

The processor 1110 may perform a denoising process to reduce noise in an input image using a diffusion generative model. The processor 1110 may perform a denoising process on an input image based on data and/or values stored in the memory 1120 and/or the cache memory 1115 to generate a restored image in which noise is reduced compared to (e.g., in comparison with) the input image. The processor 1110 may acquire the restored image by performing some (e.g., only some) processing steps selected from all the processing steps defined or included in the denoising process.

In an embodiment, the processor 1110 may acquire a feature map corresponding to an input of the diffusion generative model by using the diffusion generative model in a first processing step among the processing steps included in the denoising process. The processor 1110 may store the acquired feature map in the cache memory 1115. The diffusion generative model may include a transformer model including an attention block and a feedforward block, and a feature map output from each of the attention block and the feedforward block may be stored in the cache memory 1115. In a second processing step subsequent to the first processing step, the processor 1110 may compare a transformation determination parameter value determined for (e.g., associated with) the second processing step with a threshold value. The transformation determination parameter value determined for the second processing step may be loaded from the cache memory 1115. Based on the transformation determination parameter value determined for the second processing step being greater than the threshold value, the processor 1110 may transform a feature value of the feature map stored in the cache memory 1115 based on a transformation parameter value determined for the second processing step. The processor 1110 may linearly or nonlinearly transform the feature value of the feature map based on the transformation parameter value. The transformation parameter value determined for the second processing step may be loaded from the cache memory 1115. The processor 1110 may store linearly transformed or nonlinearly transformed feature values in the cache memory 1115. The linearly transformed or nonlinearly transformed feature values stored in the cache memory 1115 may be used in subsequent processing steps. In a third processing step subsequent to the second processing step, the processor 1110 may provide the feature map including the transformed feature value to the diffusion generative model. Based on the transformation determination parameter value determined for the second processing step in the second processing step being less than or equal to the threshold value, the processor 1110 may provide the feature map stored in the memory 1120 to the diffusion generative model in the third processing step. The first processing step, the second processing step, and the third processing step may be included in a portion of processing steps selected according to the optimization of the processing steps for a denoising process. The selected processing steps, such as the first processing step, the second processing step, and the third processing step, may be performed sequentially, thereby gradually reducing noise of the input image. When all of the selected processing steps are performed, a restored image in which noise is reduced may be acquired.

The embodiments described herein may be implemented using a hardware component, a software component and/or a combination thereof. A processing device may be implemented using one or more general-purpose or special-purpose computers, such as, for example, a processor, a controller and an arithmetic logic unit (ALU), a digital signal processor (DSP), a microcomputer, a field programmable gate array (FPGA), a programmable logic unit (PLU), a microprocessor or any other device capable of responding to and executing instructions in a defined manner. The processing device may run an operating system (OS) and one or more software applications that run on the OS. The processing device also may access, store, manipulate, process, and generate data in response to execution of the software. For purpose of simplicity, the description of a processing device is singular; however, one of ordinary skill in the art will appreciate that a processing device may include a plurality of processing elements and a plurality of types of processing elements. For example, the processing device may include a plurality of processors, or a single processor and a single controller. In addition, different processing configurations are possible, such as parallel processors.

The software may include a computer program, a piece of code, an instruction, or some combination thereof, to independently or uniformly instruct or configure the processing apparatus to operate as desired. Software and/or data may be embodied permanently or temporarily in any type of machine, component, physical or virtual equipment, or computer storage medium or device capable of providing instructions or data to or being interpreted by the processing apparatus. The software also may be distributed over network-coupled computer systems so that the software is stored and executed in a distributed fashion. The software and data may be stored by one or more non-transitory computer-readable recording mediums.

The method according to the above-described embodiments may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of examples, or they may be of the kind well-known and available to those having skill in the computer software arts.

Examples of non-transitory computer-readable media include magnetic media such as hard disks, floppy disks, and magnetic tape; optical media such as compact disc read-only memory (CD-ROM) discs and digital versatile discs (DVDs); magneto-optical media such as floptical disks; and hardware devices that are specifically configured to store and perform program instructions, such as read-only memory (ROM), random access memory (RAM), flash memory, and the like. Examples of program instructions include both machine code, such as produced by a compiler, and files containing higher-level code that may be executed by the computer using an interpreter.

The above-described hardware devices may be configured to act as one or more software modules in order to perform the operations of the above-described embodiments, or vice versa.

Although some example embodiments are described above with reference to the limited drawings, one of ordinary skill in the art may apply various technical modifications and variations based thereon. For example, suitable results may be achieved without departing from the scope of the disclosure if the described techniques are performed in a different order, and/or if components in a described system, architecture, device, or circuit are combined in a different manner, and/or replaced or supplemented by other components.

Therefore, other implementations and embodiments to the claims are also within the scope of the following claims.

**Claims**

1. An image processing method performed by an electronic device, comprising:

   providing an image comprising noise to a diffusion generative model; and
   acquiring a restored image in which the noise is reduced by performing a denoising process on the image using the diffusion generative model,
   wherein the denoising process comprises a plurality of processing steps including a first processing step, a second processing step subsequent to the first processing step, and a third processing step subsequent to the second processing step, and
   wherein the acquiring of the restored image comprises,

      in the first processing step, acquiring a feature map corresponding to an input of the diffusion generative model using the diffusion generative model,
      storing the feature map in memory, and
      based on a transformation determination parameter value associated with the second processing step being greater than a threshold value:

         in the second processing step, transforming a feature value included in the feature map stored in the memory based on a transformation parameter value associated with the second processing step, and
         in the third processing step, providing the feature map comprising the transformed feature value to the diffusion generative model.

2. The image processing method of claim 1, wherein the restored image is acquired by performing only some processing steps selected from the plurality of processing steps included in the denoising process.

3. The image processing method of claim 2, wherein a number of times that a processing step is performed in the some processing steps corresponds to a target number.

4. The image processing method according to any one of the previous claims, wherein the transforming of the feature value of the feature map comprises linearly transforming or nonlinearly transforming the feature value of the feature map based on the transformation parameter value.

5. The image processing method according to any one of the previous claims, wherein the diffusion generative model comprises a transformer model,

   wherein the transformer model comprises an attention block and a feedforward block, and
   wherein the attention block is configured to output a first feature map, and the feedforward block is configured to output a second feature map; preferably, wherein the storing of the feature map in the memory comprises storing the first feature map and the second feature map in the memory.

6. The image processing method of claim 5, wherein a first transformation determination parameter value is determined for the attention block and a second transformation determination parameter value is determined for the feedforward block in each of the plurality of processing steps, and
wherein the acquiring of the restored image comprises:

determining whether to transform the first feature map acquired in the first processing step based on the first transformation determination parameter value, in the second processing step, and
determining whether to transform the second feature map acquired in the first processing step based on the second transformation determination parameter value, in the second processing step.

7. The image processing method according to any one of the previous claims, wherein the acquiring of the restored image comprises:
based on the transformation determination parameter value associated with the second processing step being less than or equal to the threshold value in the second processing step, providing the feature map stored in the memory to the diffusion generative model in the third processing step.

8. A computer program comprising instructions which, when the program is executed by a computer, cause the computer to carry out the steps of the method according to any one of the previous method claims.

9. An electronic device, comprising:

a processor; and
memory configured to store instructions,
wherein the instructions, when executed by the processor, cause the electronic device to:

provide an image comprising noise to a diffusion generative model, and
acquire a restored image in which the noise is reduced by performing a denoising process on the image using the diffusion generative model,

wherein the denoising process comprises a plurality of processing steps including a first processing step, a second processing step subsequent to the first processing step, and a third processing step subsequent to the second processing step, and
wherein the instructions, when executed by the processor, cause the electronic device to, based on the electronic device acquiring the stored image:

in the first processing step, acquire a feature map corresponding to an input of the diffusion generative model using the diffusion generative model,
store the feature map in the memory, and
based on a transformation determination parameter value associated with the second processing step being greater than a threshold value:

transform a feature value included in the feature map stored in the memory based on a transformation parameter value associated with the second processing step in the second processing step, and
provide the feature map comprising the transformed feature value to the diffusion generative model in the third processing step.

10. The electronic device of claim 9, wherein the instructions, when executed by the processor, further cause the electronic device to:
acquire the restored image by performing only some processing steps selected from the plurality of processing steps included in the denoising process.

11. The electronic device of claim 10, wherein a number of times that a processing step is performed in the some processing steps corresponds to a target number.

12. The electronic device of claim 9, wherein the instructions, when executed by the processor, further cause the electronic device to:
linearly transform or nonlinearly transform the feature value of the feature map based on the transformation parameter value.

13. The electronic device according to any one of claims 9-12, wherein the diffusion generative model comprises a transformer model,

   wherein the transformer model comprises an attention block and a feedforward block, and
   wherein the attention block is configured to output a first feature map, and the feedforward block is configured to output a second feature map; preferably, wherein the instructions, when executed by the processor, further cause the electronic device to:
   store the first feature map and the second feature map in the memory.

14. The electronic device of claim 13, wherein a first transformation determination parameter value is determined for the attention block and a second transformation determination parameter value is determined for the feedforward block in each of the plurality of processing steps, and
   wherein the instructions, when executed by the processor, further cause the electronic device to:

   determine whether to transform the first feature map acquired in the first processing step based on the first transformation determination parameter value, in the second processing step, and
   determine whether to transform the second feature map acquired in the first processing step based on the second transformation determination parameter value, in the second processing step.

15. The electronic device according to any one of claims 9-14, wherein the instructions, when executed by the processor, further cause the electronic device to,
   based on the transformation determination parameter value for the second processing step being less than or equal to the threshold value in the second processing step, provide the feature map stored in the memory to the diffusion generative model in the third processing step.

Electronic device 100

Processor
110

Memory
120

Image containing
noise 130

Restored image
140

FIG. 1

$$X_0 \quad \cdots \quad X_{t-1} \quad X_t \quad X_{t+1} \quad \cdots \quad X_T$$

210

220

230

**FIG. 2**

| Processing step optimization module 310 | → | Caching module 320 | → | Transformation module 330 |

Diffusion generative model 300

# FIG. 3

**FIG. 4**

EP 4 776 227 A1

```
              ┌──────────────┐
              │    Memory    │◄──────────────────────────────┐
              │     120      │                               │
              └──────────────┘                               │
                     ▲                                       │
                     │                                       │
┌────────────┐  ┌──────────────┐  ┌────────────┐  ┌────────────┐  ┌────────────────┐
│ Attention  │  │  Attention   │  │  Residual  │  │Feedforward │  │ Feedforward    │
│   block    │─►│    block     │─►│   block    │─►│ block 530  │─►│ block feature  │
│    510     │  │feature map   │  │    520     │  │            │  │   map 535      │
│            │  │    515       │  │            │  │            │  │                │
└────────────┘  └──────────────┘  └────────────┘  └────────────┘  └────────────────┘
```

**FIG. 5**

```
┌──────────────┐
│    Memory    │──────────────────────────────────────────┐
│     120      │                                           │
└──────────────┘                                           │
       │                                                   │
       ▼                                                   ▼
┌────────────┐ Transform ┌────────────┐  ┌────────────┐ ┌────────────────┐ Transform ┌────────────┐
│ Attention  │──────────►│ Transformed│  │  Residual  │ │  Feedforward   │──────────►│ Transformed│
│   block    │           │feature map │─►│   block    │►│ block feature  │           │ feature map│
│feature map │           │    610     │  │    520     │ │   map 535      │           │    620     │
│    515     │           │            │  │            │ │                │           │            │
└────────────┘           └────────────┘  └────────────┘ └────────────────┘           └────────────┘
```

**FIG. 6**

**FIG. 7**

EP 4 776 227 A1

**800**

Feedforward block
**808**

Attention block
**806**

Feedforward block
**804**

Attention block
**802**

First processing step

Acquire feedforward block feature map **840**

Acquire attention block feature map **830**

Acquire feedforward block feature map **820**

Acquire attention block feature map **810**

Second processing step

Transform feedforward block feature map **842**

Use stored attention block feature map **832**

Use stored feedforward block feature map **822**

Use stored attention block feature map **812**

Third processing step

Use stored feedforward block feature map **844**

Transform feature map **834**

Use stored feedforward block feature map **824**

Transform feature map **814**

FIG. 8

Start

Provide image containing noise to diffusion generative model 910

Acquire restored image in which noise is reduced by
performing denoising process 920

End

FIG. 9

```
                    ┌─────────┐
                    │  Start  │
                    └─────────┘
                         │
                         ▼                        ⌐ 1010
 ┌──────────────────────────────────────────────────┐
 │  Acquire feature map corresponding to input of     │
 │  diffusion generative model using diffusion         │
 │  generative model                                   │
 └──────────────────────────────────────────────────┘
                         │
                         ▼                        ⌐ 1020
 ┌──────────────────────────────────────────────────┐
 │            Store feature map in memory             │
 └──────────────────────────────────────────────────┘
                         │
                         ▼                        ⌐ 1030
              Transformation
  Yes    determination parameter value      No
            > threshold value?
```

**1010** — Acquire feature map corresponding to input of diffusion generative model using diffusion generative model

**1020** — Store feature map in memory

**1030** — Transformation determination parameter value > threshold value?

Yes

No

**1040** — Transform feature value of feature map stored in memory based on transformation determination parameter value

**1050** — Provide feature map including transformed feature value to diffusion generative model

**1060** — Provide feature map stored in memory to diffusion generative model

End

## FIG. 10

1100

Processor 1110

Cache memory
1115

Memory
1120

FIG. 11

Europäisches
Patentamt

European
Patent Office

Office européen
des brevets

## EUROPEAN SEARCH REPORT

**Application Number**

EP 25 20 6864

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WIMBAUER FELIX ET AL: "Cache Me if You Can: Accelerating Diffusion Models through Block Caching", 2024 IEEE/CVF CONFERENCE ON COMPUTER VISION AND PATTERN RECOGNITION (CVPR) IEEE, 16 June 2024 (2024-06-16), pages 6211-6220, XP034697337, DOI: 10.1109/CVPR52733.2024.00594 [retrieved on 2024-09-16] * abstract * * section 3 * | 1-15 | INV. G06T11/00 |
| A | PRATHEBA SELVARAJU ET AL: "FORA: Fast-Forward Caching in Diffusion Transformer Acceleration", ARXIV.ORG CORNELL UNIVERSITY LIBRARY, 201 OLIN LIBRARY CORNELL UNIVERSITY ITHACA, NY 14853, 1 July 2024 (2024-07-01), XP091806201, * abstract * * section 3 * | 1-15 | |
| A | XINYIN MA ET AL: "Learning-to-Cache: Accelerating Diffusion Transformer via Layer Caching", ARXIV.ORG CORNELL UNIVERSITY LIBRARY, 201 OLIN LIBRARY CORNELL UNIVERSITY ITHACA, NY 14853, 3 June 2024 (2024-06-03), XP091778042, * abstract * * section 3 * | 1-15 | |

**TECHNICAL FIELDS SEARCHED (IPC)**

G06T

-/--

The present search report has been drawn up for all claims

| Place of search | Date of completion of the search | Examiner |
|---|---|---|
| Munich | 10 March 2026 | Engels, Angela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches Patentamt

European Patent Office

Office européen des brevets

**EUROPEAN SEARCH REPORT**

Application Number

EP 25 20 6864

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (IPC) |
| A | LIJIANG LI ET AL: "AutoDiffusion: Training-Free Optimization of Time Steps and Architectures for Automated Diffusion Model Acceleration", ARXIV.ORG CORNELL UNIVERSITY LIBRARY, 201 OLIN LIBRARY CORNELL UNIVERSITY ITHACA, NY 14853, 19 September 2023 (2023-09-19), XP091617280, * abstract * * section 2.3 * ----- | 2,3 | |
| | | | TECHNICAL FIELDS SEARCHED (IPC) |

The present search report has been drawn up for all claims

| Place of search | Date of completion of the search | Examiner |
|---|---|---|
| Munich | 10 March 2026 | Engels, Angela |

EPO FORM 1503 03.82 (P04C01)

page 2 of 2